# EUROPEAN PATENT APPLICATION

(11) **EP 4 800 863 A1**
(43) Date of publication of application: **02.09.2026**
(21) Application number: 25855329.6
(22) Date of filing: 07.02.2025
(51) Int. Cl.: H02G 15/18, H01R 13/639

(54) **CABLE SHEATH AND CHARGING GUN COMPRISING SAME**

(30) Priority: 05.11.2024 US 202463716261 P
(71) Applicant: Delta Electronics, Inc., Taoyuan City 33370 (TW)
(72) Inventor: CHENG, Chao-Chun, Taoyuan City (TW)
(74) Representative: Uexküll & Stolberg
(86) International application number: PCT/CN2025/076171
(87) International publication number: WO 2026/097717

(57) **Abstract**

The present disclosure discloses a cable sheath and a charging gun for the cable sheath. The cable sheath includes an inner portion and an outer portion. The inner portion includes a first engaging portion, a second engaging portion and two first hollow portions. The first engaging portion includes a first penetrating portion. A center of the first penetrating portion includes a first axial. The second engaging portion includes a second penetrating portion. A center of the second penetrating portion includes a second axial. An angle is formed between the first axial and the second axial. The angle is less than 170 degrees. The first hollow portions are disposed at a connection between the first engaging portion and the second engaging portion. The first hollow portions are penetrated through a lateral surface of the inner portion. Each of the first hollow portions includes a width in a direction from the first engaging portion toward the second engaging portion. The outer portion includes a lateral surface, a third penetrating portion and a second hollow portion. The third penetrating portion is penetrated along an axial direction of the outer portion. The second hollow portion is penetrated through the lateral surface.

## Description

### FIELD OF THE INVENTION

The present invention relates to a charging gun and more particularly to a cable sheath and a charging gun for the cable sheath.

### BACKGROUND OF THE INVENTION

The charging gun includes a gun head, a cable and a cable sheath. One terminal of the cable is connected with an interior of the gun head. The cable sheath covers and engages with a connecting portion between the cable and the gun head so as to protect the connecting portion. The cable sheath includes an inner portion and an outer portion. The inner portion is disposed within the gun head and engaged with an inner surface of the gun head. The inner portion covers a portion of the cable located within the gun head. The outer portion is disposed outside the gun head and covers another portion of the cable located outside the gun head. In the conventional cable sheath, an axial center of the inner portion and an axial center of the outer portion are aligned along with same straight line. When the gun head has a curvature, the cable inserted into the gun head is curved at an angle close to 90 degrees. Consequently, the cable is damaged easily. Moreover, the conventional cable sheath is a solid structure. Consequently, the resistance of the cable inserted into the gun head is enhanced when the cable is replaced.

Therefore, there is a need of providing a cable sheath and a charging gun for the cable sheath to obviate the drawbacks encountered from the prior arts.

### SUMMARY OF THE INVENTION

The present disclosure provides a cable sheath and a charging gun for the cable sheath. The inner portion of the cable sheath includes two first hollow portions. The inner portion is deformable according to the arrangement of the first hollow portions, so that the inner portion 4 is deformed by receiving the cable. Consequently, the cable can be curved with a reduced designed curvature for reducing the risk of damage and improving the ease of positioning and assembling.

In accordance with an aspect of the present disclosure, a cable sheath is provided. The cable sheath is connected between a charging gun head and a cable. The cable sheath includes an inner portion and an outer portion. The inner portion includes a first engaging portion, a second engaging portion and two first hollow portions. The first engaging portion includes a first penetrating portion. The first penetrating portion penetrates through an axial direction of the first engaging portion. A center of the first penetrating portion forms a first axial. The second engaging portion includes a second penetrating portion. The second penetrating portion penetrates through an axial direction of the second engaging portion. T center of the second penetrating portion forms a second axial. An angle is formed between the first axial and the second axial. The angle is less than 170 degrees. The two first hollow portions are disposed at a connection between the first engaging portion and the second engaging portion. The two first hollow portions penetrating through a lateral surface of the inner portion. Each of the two first hollow portions comprises a width in a direction from the first engaging portion toward the second engaging portion. The outer portion includes a lateral surface, a third penetrating portion and a plurality of second hollow portions. The third penetrating portion penetrates through an axial direction of the outer portion. The plurality of second hollow portions penetrates through the lateral surface.

In accordance with another aspect of the present disclosure, a charging gun is provided. The charging gun includes a charging gun head, a cable and a cable sheath. At least portion of the cable is connected with the charging gun head. The cable sheath is connected between the charging gun head and the cable. The cable sheath includes an inner portion and an outer portion. The inner portion includes a first engaging portion, a second engaging portion and two first hollow portions. The first engaging portion includes a first penetrating portion. The first penetrating portion penetrates through an axial direction of the first engaging portion. A center of the first penetrating portion forms a first axial. The second engaging portion includes a second penetrating portion. The second penetrating portion penetrates through an axial direction of the second engaging portion. T center of the second penetrating portion forms a second axial. An angle is formed between the first axial and the second axial. The angle is less than 170 degrees. The two first hollow portions are disposed at a connection between the first engaging portion and the second engaging portion. The two first hollow portions penetrating through a lateral surface of the inner portion. Each of the two first hollow portions comprises a width in a direction from the first engaging portion toward the second engaging portion. The outer portion includes a lateral surface, a third penetrating portion and a plurality of second hollow portions. The third penetrating portion penetrates through an axial direction of the outer portion. The plurality of second hollow portions penetrates through the lateral surface.

### BRIEF DESCRIPTION OF THE DRAWINGS

FIG. 1 is a schematic view illustrating a charging gun of the present disclosure;
FIG. 2 is a schematic view illustrating a cable sheath of the charging gun of FIG. 1;
FIG. 3 is a side view of the cable sheath of the charging gun of FIG. 2; and
FIG. 4 is a top view of the cable sheath of the charging gun of FIG. 2.

### Description of reference numerals:

1: cable sheath
2: cable
D: outer diameter
3: charging gun head
31: inner annular groove
4: inner portion
41: first engaging portion
411: outer annular protruding portion
412: first penetrating portion
X1: first axial
42: second engaging portion
421: second penetrating portion
X2: second axial
A: angle
422: waterproof ring
422a: recess
43: first hollow portion
B: first width
44: connecting portion
C: second width
5: outer portion
51: lateral surface
52: third penetrating portion
53: second hollow portion
X3: third axial
9: charging gun

### DETAILED DESCRIPTION OF THE PREFERRED EMBODIMENT

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed.

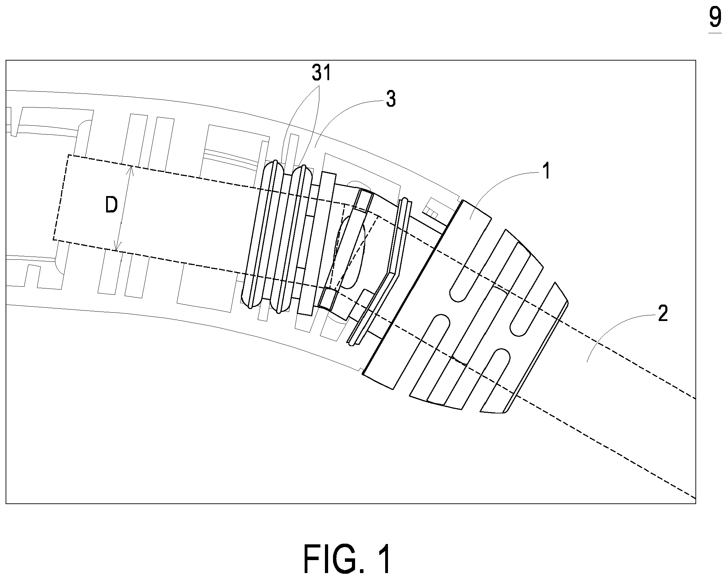

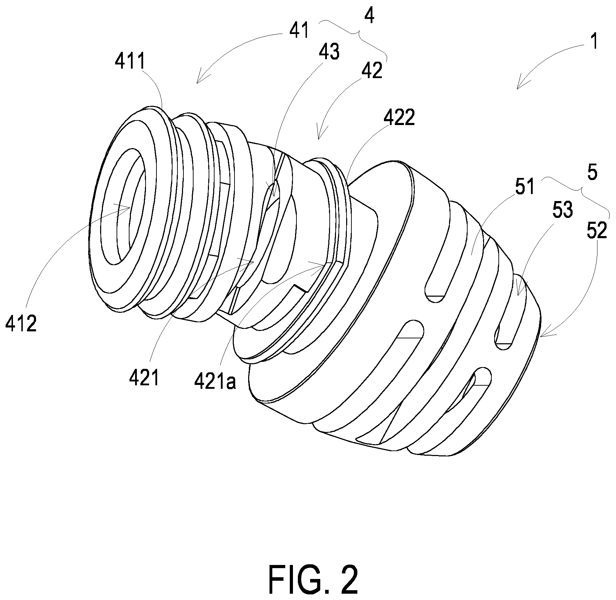

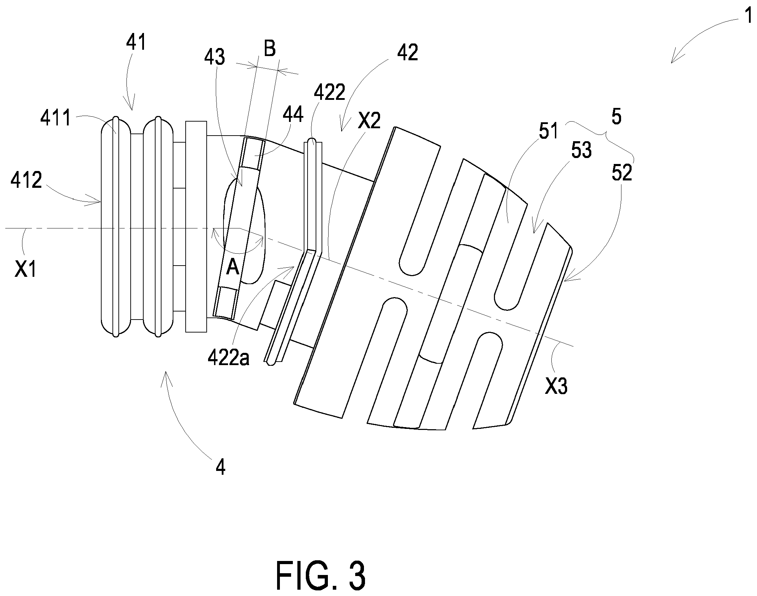

Please refer to FIG. 1 to FIG. 3. FIG. 1 is a schematic view illustrating a charging gun of the present disclosure. FIG. 2 is a schematic view illustrating a cable sheath of the charging gun of FIG. 1. FIG. 3 is a side view of the cable sheath of the charging gun of FIG. 2. As shown in FIG. 1, the charging gun 9 of the present disclosure includes a cable 2, a charging gun head 3 and a cable sheath 1. The cable 2 is connected with a power supply device (not shown) to transmit an electric energy provided by the power supply device. The charging gun head 3 is connected with the cable 2 to receive the electric energy transmitted by the cable 2 and provide the electric energy to a charging device (not shown). The cable sheath 1 is configured to cover the cable 2 and engage with an inner annular groove 31 disposed within the charging gun head 3. A portion of the cable 2 is inserted into and connected with the charging gun head 3. Another portion of the cable 2 is exposed to the charging gun head 3. The cable 2 has an outer diameter D.

As shown in FIGS. 1 and 2, the cable sheath 1 is connected between the charging gun head 3 and the cable 2, and includes an inner portion 4 and an outer portion 5. The cable sheath 1 is configured to cover the cable 2 located within the charging gun head 3 and engage with the inner annular groove 31 of the charging gun head 3 through the inner portion 4. The cable sheath 1 is configured to cover the cable 2 exposed to the exterior of the charging gun head 3 through the outer portion 5. In this embodiment, the inner portion 4 and the outer portion 5 are integrally formed into one piece. As shown in FIG. 3, the inner portion 4 includes a first engaging portion 41, a second engaging portion 42 and two first hollow portions 43. The first engaging portion 41 is annular and includes a plurality of outer annular protruding portions 411 and a first penetrating portion 412. Each outer annular protruding portion 411 is protruded outwardly from an outer surface of the first engaging portion 41. The outer annular protruding portions 411 of the first engaging portion 41 is engaged with the corresponding inner annular groove 31 of the charging gun head 3. Consequently, the inner portion 4 is engaged within the charging gun head 3. The first penetrating portion 412 is penetrated through the axial direction of the first engaging portion 41. The first penetrating portion 412 is configured to receive a portion of the cable 2 located within the charging gun head 3. The center of the first penetrating portion 412 forms a first axial X1. The extending direction of the first axial X1 is corresponding to the extending direction of the portion of the cable 2 located within the charging gun head 3, as shown in FIG. 3.

As shown in FIGS. 2 and 3, the second engaging portion 42 is annular and includes a second penetrating portion 421. The second penetrating portion 421 is penetrated through the axial direction of the second engaging portion 42 and in communication with the first penetrating portion 412 to receive another portion of the cable 2 located within the charging gun head 3. The center of the second penetrating portion 421 forms a second axial X2. The extending direction of the second axial X2 is corresponding to the extending direction of the portion of the cable 2 located outside the charging gun head 3. An angle A is formed between the second axial X2 and the first axial X1. The angle A is less than 170 degrees, as shown in FIG. 3. In an embodiment, the angle A is ranged between 140 degrees and 170 degrees. In this embodiment, the second engaging portion 42 further includes a waterproof ring 422. The waterproof ring 422 is protruded from an outer surface of the second engaging portion 42 and disposed around the outer surface of the second engaging portion 42. When the inner portion 4 is engaged with the charging gun head 3, the waterproof ring 422 prevents moisture from entering the interior of the charging gun head 3. The waterproof ring 422 further includes at least one recess 422a. The opening direction of the recess 422a faces toward the first engaging portion 41. In this embodiment, an inner diameter of the first engaging portion 41 and/or an inner diameter of the second engaging portion 42 may be equal to the outer diameter D of the cable 2.

The two first hollow portions 43 are disposed at a connection between the first engaging portion 41 and the second engaging portion 42. The two first hollow portions 43 penetrate through two opposite side lateral surfaces of the inner portion 4, respectively. Consequently, the connection between the first penetrating portion 412 and the second penetrating portion 421 is exposed through the first hollow portions 43. The inner portion 4 is deformable according to the arrangement of the first hollow portions 43, so that the inner portion 4 is deformed by receiving the cable 2. Consequently, the cable 2 can be curved with a reduced designed curvature for reducing the risk of damage and improving the ease of positioning and assembling. In this embodiment, each first hollow portion 43 includes a first width B in a direction from the first engaging portion 41 toward the second engaging portion 42. In an embodiment, the first width B of the first hollow portion 43 is correlated with the outer diameter D of the cable 2. For example, the first width B of the first hollow portion 43 is 15% of the outer diameter D of the cable 2.

The outer portion 5 includes a lateral surface 51, a third penetrating portion 52 and a plurality of second hollow portions 53. An outer diameter of the lateral surface 51 corresponding to a terminal adjacent to the inner portion 4 greater than an outer diameter corresponding to an opposite terminal away from the inner portion 4. Consequently, the outer portion 5 forms a barrel-shaped structure. The third penetrating portion 52 penetrates through the axial direction of the outer portion 5 and communicates with the second penetrating portion 421 and the first penetrating portion 412. The third penetrating portion 52 is configured to receive the portion of the cable 2 located outside the charging gun head 3. The center of the third penetrating portion 52 forms a third axial X3. The third axial X3 is aligned with the second axial X2. Each second hollow portion 53 penetrates through the lateral surface 51 of the outer portion 5. Consequently, the third penetrating portion 52 of the outer portion 5 is exposed through the second hollow portions 53. A direction formed by each second hollow portion 53 is the same with a direction of the lateral surface 51 recessed toward the third penetrating portion 52. The direction is perpendicular to the third axial X3. In this embodiment, the plurality of second hollow portions 53 are arranged in three layers along the direction of the third axial X3. Each layer includes two second hollow portions 53. The two second hollow portions 53 of each layer are staggered with the two second hollow portions 53 of an adjacent layer. For example, the two second hollow portions 53 of a first layer are staggered with the two second hollow portions 53 of a second layer. The two second hollow portions 53 of the second layer are staggered with the two second hollow portions 53 of a third layer.

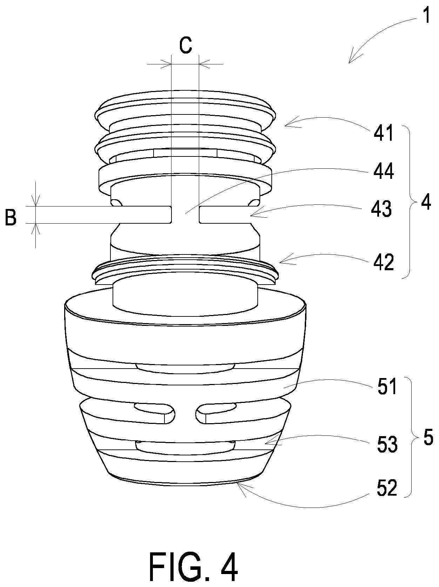

Please refer to FIG. 4, accompanied by FIGS. 1 to 3. FIG. 4 is a top view of the cable sheath of the charging gun of FIG. 2. As shown in FIGS. 1 to 4, the inner portion 4 further includes two connecting portions 44. The two connecting portions 44 are opposite to each other. Each connecting portion 44 is connected between the first engaging portion 41 and the second engaging portion 42, and located between the two first hollow portions 43. Each connecting portion 44 includes a second width C in a radial direction of the inner portion 4. In an embodiment, the second width C of the connecting portion 44 is correlated with the outer diameter D of the cable 2. For example, the second width C of the connecting portion 44 is greater than 3 mm. The second width C of the connecting portion 44 is ranged between 25% and 30% of the outer diameter D of the cable 2.

As mentioned above, the charging gun of the present disclosure includes a cable sheath. The inner portion of the cable sheath includes two first hollow portions. The inner portion is deformable according to the arrangement of the first hollow portions, so that the inner portion 4 is deformed by receiving the cable. Consequently, the cable can be curved with a reduced designed curvature for reducing the risk of damage and improving the ease of positioning and assembling. Moreover, the first width of the first hollow portion and the second width of the connecting portion of the cable sheath are correlated with the outer diameter of the cable. Consequently, the first width of the first hollow portion and the second width of the connecting portion can be adjusted according to the size of the outer diameter of the cable. Accordingly, the cable sheath can be deformed during assembly while maintaining sufficient rigidity to allow the cable to be curved along a designated curvature. Consequently, the applicability of the charging gun is improved.

While the disclosure has been described in terms of what is presently considered to be the most practical and preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A cable sheath, **characterized by** connected between a charging gun head and a cable, and comprising:
an inner portion, comprising:
a first engaging portion comprising a first penetrating portion, wherein the first penetrating portion penetrates through an axial direction of the first engaging portion, and a center of the first penetrating portion forms a first axial;
a second engaging portion comprising a second penetrating portion, the second penetrating portion penetrates through an axial direction of the second engaging portion, and a center of the second penetrating portion forms a second axial, wherein an angle is formed between the first axial and the second axial, and the angle is less than 170 degrees; and
two first hollow portions disposed at a connection between the first engaging portion and the second engaging portion, the two first hollow portions penetrating through a lateral surface of the inner portion, wherein each of the two first hollow portions comprises a width in a direction from the first engaging portion toward the second engaging portion; and
an outer portion comprising a lateral surface, a third penetrating portion and a plurality of second hollow portions, the third penetrating portion penetrating through an axial direction of the outer portion, and the plurality of second hollow portions penetrating through the lateral surface.

2. The cable sheath according to claim 1, **characterized in that** the first engaging portion comprises a plurality of outer annular protruding portions, each of the plurality of outer annular protruding portions protruding from an outer surface of the first engaging portion.

3. The cable sheath according to claim 1, **characterized in that** the second engaging portion comprises a waterproof ring protruding from an outer surface of the second engaging portion and disposed around the outer surface of the second engaging portion, wherein the waterproof ring comprises at least one recess, and an opening direction of the at least one recess faces toward the first engaging portion.

4. The cable sheath according to claim 1, **characterized in that** the angle between the second axial and the first axial is ranged between 140 degrees and 170 degrees.

5. The cable sheath according to claim 1, **characterized in that** a center of the third penetrating portion forms a third axial, and the third axial is aligned with the second axial.

6. The cable sheath according to claim 5, **characterized in that** the plurality of second hollow portions are arranged in n layers along a direction of the third axial, and the second hollow portions of each layer are staggered with the second hollow portions of an adjacent layer, where n is greater than or equal to three.

7. The cable sheath according to claim 1, **characterized in that** the inner portion comprises two connecting portions disposed opposite to each other, each of the two connecting portion is connected between the first engaging portion and the second engaging portion, and disposed between the two first hollow portions.

8. A charging gun, **characterized by** comprising:
a charging gun head;
a cable, wherein at least portion of the cable is connected with the charging gun head; and
a cable sheath connected between the charging gun head and the cable, and comprising:
an inner portion, comprising:
a first engaging portion comprising a first penetrating portion, wherein the first penetrating portion penetrates through an axial direction of the first engaging portion, and a center of the first penetrating portion forms a first axial;
a second engaging portion comprising a second penetrating portion, the second penetrating portion penetrates through an axial direction of the second engaging portion, and a center of the second penetrating portion forms a second axial, wherein an angle is formed between the first axial and the second axial, and the angle is less than 170 degrees; and
two first hollow portions disposed at a connection between the first engaging portion and the second engaging portion, the two first hollow portions penetrating through a lateral surface of the inner portion, wherein each of the two first hollow portions comprises a width in a direction from the first engaging portion toward the second engaging portion; and
an outer portion comprising a lateral surface, a third penetrating portion and a plurality of second hollow portions, the third penetrating portion penetrating through an axial direction of the outer portion, and the plurality of second hollow portions penetrating through the lateral surface.

9. The charging gun according to claim 8, **characterized in that** an extending direction of the first axial of the first penetrating portion is corresponding to an extending direction of the cable disposed within the charging gun head.

10. The charging gun according to claim 8, **characterized in that** an inner diameter of the first engaging portion and/or an inner diameter of the second engaging portion is equal to an outer diameter of the cable.

11. The charging gun according to claim 8, **characterized in that** each of the two first hollow portions comprises a first width in a direction from the first engaging portion toward the second engaging portion, and the first width is 15% of the outer diameter of the cable.

12. The charging gun according to claim 8, **characterized in that** the inner portion comprises two connecting portions disposed opposite to each other, each of the two connecting portion is connected between the first engaging portion and the second engaging portion, and disposed between the two first hollow portions.

13. The charging gun according to claim 12, **characterized in that** each of the two connecting portion comprises a second width in a radial direction of the inner portion, and the second width is ranged between 25% and 30% of the outer diameter of the cable.
